Europäisches Patentamt

European Patent Office

Office européen des brevets

(11) Publication number: 0 188 509
B1

(12) EUROPEAN PATENT SPECIFICATION

(45) Date of publication of patent specification: 27.06.90

(21) Application number: 85903409.2

(22) Date of filing: 11.07.85

(86) International application number:
PCT/NO85/00043

(87) International publication number:
WO 86/00701 30.01.86 Gazette 86/03

(54) LEAKAGE AND DEFECT TEST APPARATUS.

(30) Priority: 13.07.84 NO 842871

(43) Date of publication of application:
30.07.86 Bulletin 86/31

(45) Publication of the grant of the patent:
27.06.90 Bulletin 90/26

(84) Designated Contracting States:
AT BE CH DE FR GB IT LI LU NL SE

(56) References cited:
US-A-3 010 310
US-A-3 704 623
US-A-3 805 593
US-A-3 805 594
US-A-3 995 473
US-A-4 278 173

(51) Int. Cl.⁵: G 01 M 3/32

(73) Proprietor: FLEXIMATIC A/S
Vaerlegaten 64
N-1500 Moss (NO)

(72) Inventor: JANITZ, Bernt
Ryggeveien 129
N-1570 Dilling (NO)

(74) Representative: Weston, Robert Dale et al
c/o PHILLIPS & LEIGH 7 Staple Inn
Holborn London WC1V 7QF (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to leakage and defect test apparatus for containers, such as blow-moulded plastics bottles and the like.

Test apparatus of various kinds for this purpose are known, most of them are intended for sequential testing with each container being closed in a suitable manner and exposed to pressure, a differential pressure between the inside and outside of the container then being measured. If changes appear in such differential pressure the container is ejected.

US—A—3 805 594 discloses a piston shaped at one end to sealingly engage an opening in a container and axially slidable within a cylinder, means to introduce fluid under pressure into the container and means to measure fluid pressure in the container.

US—A—3 995 473 discloses a vertical pipe adapted to be introduced into a bottle, a sealing gasket to seal with the neck of the bottle and a pressure sensitive diaphragm.

US—A—4 278 173 discloses apparatus for simultaneously gauging the internal diameter and detecting the presence of unfilled or warped finishes of glass containers.

In DE—A1—32 46 095, furthermore, a device for testing the sealing surfaces of a number of containers is disclosed.

None of these documents disclose leakage and defect test apparatus wherein fluid pressure in the container is directly measured by pressure measuring means.

It is an object of the present invention to provide a simple and easily handled device for testing the containers, especially plastic bottles, as to leakages and defects in one single step.

This object is achieved by the features set out in claim 1.

According to the present invention leakage and defect test apparatus comprises a piston shaped at one end to sealingly engage an opening in a container, axially slidable within a cylinder and carrying a feeler to detect blockage in the container opening, and means to introduce fluid under pressure into the container; the piston having a duct in communication between the cylinder and the container and fluid pressure measuring means is connected to the cylinder for direct measurement of fluid pressure in the container.

In a preferred embodiment of the present invention, the piston and cylinder are sealed by a bellows, whereby compression of the apparatus can introduce fluid under pressure into the container. Also, the feeler depends from said one end of the piston, whereby an obstruction in the container opening will cause the feeler to move with respect to the piston, to vent to atmosphere fluid pressure in the container.

Test apparatus according to the present invention has a very compact and simple structure and it may easily be used as a manual apparatus or as a device incorporated in the manufacturing step, said device easily being installable in existing conveying facilities in a container manufacturing plant, e.g. a plant having a production capacity of 2000 one-litre containers/hour. Said device can of course be installed in smaller plants as well as in plants having much greater capacity.

It will be appreciated that test apparatus according to the present invention as well as being used for testing containers that should be leak-proof can also be used for all kinds of limited volumes having any kind of opening or the like.

The above and other features of the present invention are illustrated, by way of example, in the drawings; wherein:—

Fig. 1 shows an apparatus according to the invention arranged above a plastic bottle to be tested;

Fig. 2 shows the apparatus of Fig. 1 in a testing position on a bottle, in this figure a leak-proof bottle;

Fig. 3 shows the apparatus of Fig. 1 in a testing position, but for a leaking bottle; and

Fig. 4 shows the apparatus of Fig. 1 in a testing position on a bottle that has a moulding defect in the neck area.

In the figures a testing device is shown as utilized for testing a recently moulded plastic bottle. Said bottle is designated 1. It should be mentioned in this connection that it is possible to test containers or "closed volumes" of quite different kinds, an adaptation of the contact surfaces between the device and the container opening being the only necessary measure. The remaining functions of the device will remain the same. It is also possible to test containers made from different kinds of materials, i.e. the device is not limited to testing plastic containers.

The main component of the testing device is a piston/cylinder system, the piston of which is designated 2 and the cylinder is designated 3. The piston 2 is comprised of a head and the piston itself is tube shaped as shown. On the piston head and opposed to the piston tube is a projecting part ending in a conical contact surface 4. The cylinder 3 also extends from a head and envelopes the piston with part of its circumference. Said piston and cylinder are kept spaced from each other by the aid of an expansion spring 5. The spring is surrounded by a bellows 6 which may also form a means to limit the relative expansion of the piston and cylinder. The bellows may also form an exterior limit of the cylinder, being sealed against piston 2 and against cylinder 3, making the space inside bellows 6 part of the "pressure exerting" space.

This is indicated in the figures by a channel shown in the area above spring 5 below the wide portion of the cylinder.

In the cylinder head, a channel 7 is provided and extends towards a pressure indicator, which is here generally shown as a pressure gauge but which may also comprise a warning light circuit controlled by a diaphragm means or the like (not shown). Such diaphragm means may be arranged in channel 7 and may also control other mechanisms in connection with the manufacturing of bottles. In the cylinder head, as indicated at 9, there may be provided attachment means to fit the device to another tool.

As mentioned the piston 2 is tube-shaped and has an end disk 10 having a through bore 11 therein. As shown piston 2 is, furthermore, provided with a movable probe 12 for testing the container as to any moulding defects. This probe 12 has a spherical head and is rod-shaped and extends through a duct 13 in the piston head 2 and ends in a sealed-off further piston 14 which moves within piston 2. This further piston 14 is sealed against duct 13 by packings 15 at its lower end and is provided with an inner bore 16 extending to the tube shaped interior of piston 2. Inside this tube shaped interior space, and between end disk 10 and the further piston 14 is a spring 17 which maintains probe 12 in an extended position. The piston head 2 is also provided with a vent 19, sealed by further piston 14.

The device operates as follows:—

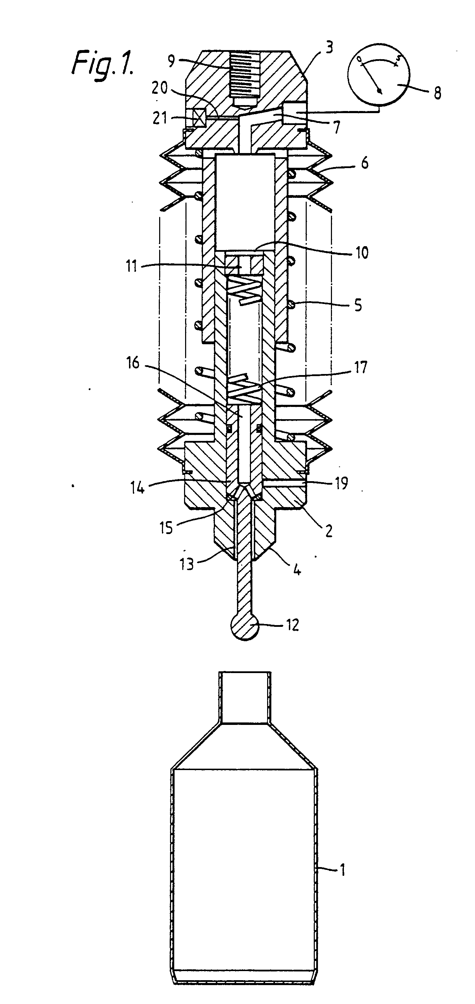

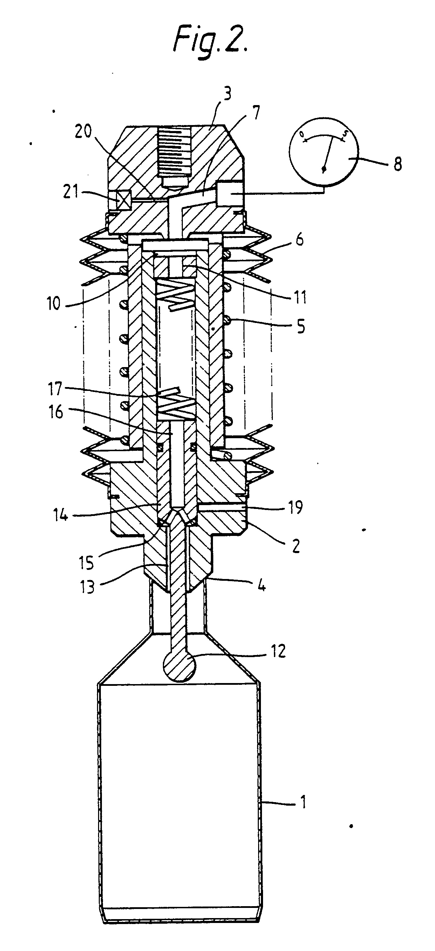

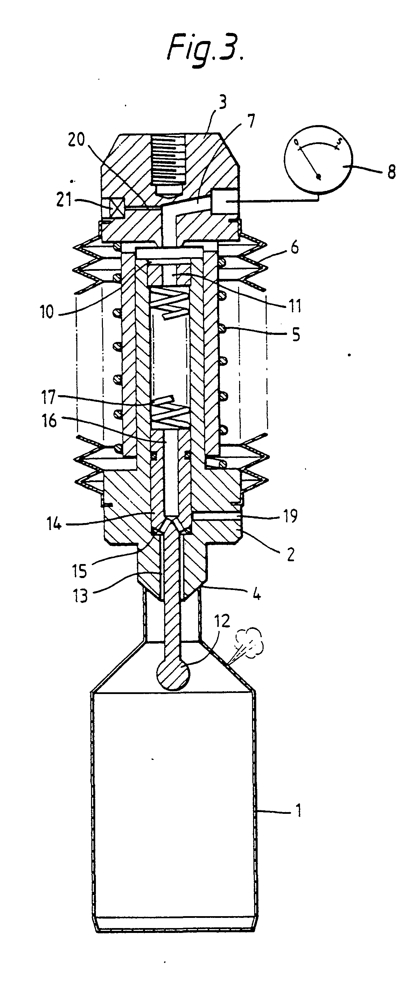

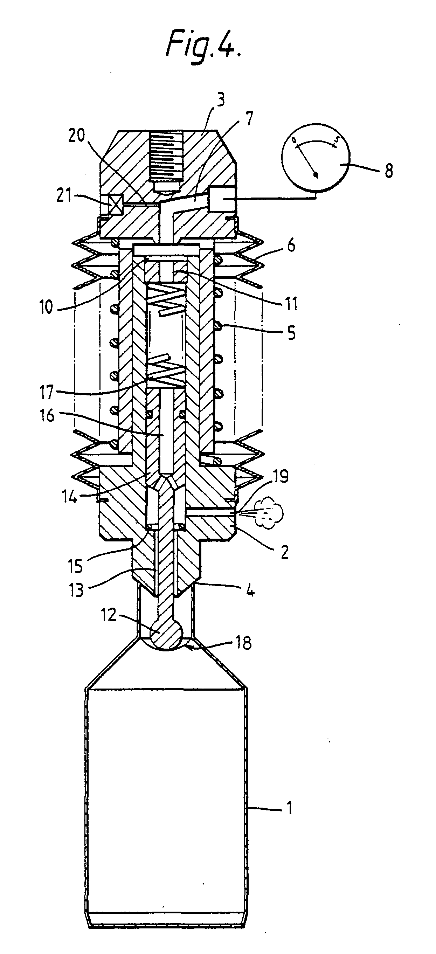

To test a plastic bottle 1, the device is moved from the position shown in Fig. 1 to the position shown in Fig. 2. Contact surfaces 4 will then engage the bottle neck and, if said bottle neck has no defects, sealing is achieved. The device is pressed down towards the bottle, spring 5 and bellows 6 are compressed and air is pumped into bottle 1. The air pressure is measurable through ducts 13, 16 and 7. In the case of a non-leaking bottle, there will be a deflection of the pressure indicator as shown in Fig. 2. In the case of a leaking bottle, as indicated by Fig. 3, the pressure indicator will not deflect to indicate pressure in the bottle. If there is a moulding defect in the bottle neck, which may easily occur when plastic bottles are moulded, i.e. a film is formed as indicated at 18 in Fig. 4, the head of probe 12 will abut said film and urge the further piston 14 upwards inside piston 2. Thus vent 19 is opened and, again, pressure will decrease and indicate a defect.

If it is desirable to use the testing device for different containers, i.e. containers having different volumes, it may be necessary to provide a pressure relief valve enabling a predetermined and constant pressure to be set in the containers during testing. As indicated in cylinder head 3, a further duct 20, branching off duct 7 and leading to valve 21 is provided; valve 21 opens at a predetermined pressure and may be adjustable. Due to this feature bottles may be tested at the same pressure irrespective of their size.

It will be appreciated that it is essential that testing is carried out at a low pressure, since testing at a high pressure might cause defects or weakening of the container.

Obviously, the arrangement of piston and cylinder as well as springs may be varied. It is also possible to adapt the device for special applications, e.g. by providing a contact surface 4 of a different shape and, if desired, providing it with a certain probe function.

## Claims

1. Leakage and defect test apparatus for containers comprising a piston (2) shaped at one end (4) to sealingly engage an opening in a container (1) and axially slidable within a cylinder (3), means to introduce fluid under pressure into the container and means (8) to measure fluid pressure in the container; the piston (2) carrying a feeler (12) to detect blockage in the container opening, characterised in that the piston (2) has a duct (13, 16, 11) in communication between the container (1) and the cylinder (3) and the fluid pressure measuring means (8) is connected to the cylinder for direct measurement of fluid pressure in the container.

2. Test apparatus as claimed in Claim 1, characterised in that the piston (2) and cylinder (3) are sealed by a bellows (6) whereby compression of the apparatus can introduce fluid under pressure into the container (1) through the duct (13, 16, 11).

3. Test apparatus as claimed in Claim 1 or Claim 2, characterised in that the feeler (12) depends from said one (4) of the piston and is axially movable within and sealed with respect to duct (13) in the piston, whereby an obstruction in the container opening will cause the feeler to move with respect to the piston and uncover a port (19) in the piston, to vent to atmosphere fluid pressure in the container.

4. Test apparatus as claimed in any of claims 1 to 3, characterised in that a valve (21) venting to atmosphere is connected to the cylinder (3) to limit pressure in the container.

5. Test apparatus as claimed in any of claims 1 to 4, characterised in that the pressure measuring means (8) is a pressure gauge.

6. Test apparatus as claimed in any of claims 1 to 4, characterised in that the pressure measuring means (8) is pressure diaphragm operated electrical circuit to control a warning lamp, faulty container ejection mechanism or provide a fault signal for other equipment.

## Patentansprüche

1. Testgerät zur Leck-und Defektprüfung von Behältern, umfassend einen Kolben (2), dessen eines Ende (4) so geformt ist, dass er sich dicht in die Oeffnung eines Behälters (1) einfügt, wobei der Kolben axial innerhalb eines Zylinders (3) verschiebbar ist, Mittel zum Einleiten von unter Druck stehender Flüssigkeit in den Behälter und Mittel (8) zum Messen des Flüssigkeitsdruckes im Behälter; wobei der Kolben (2) einen Fühler (12) zur Ermittlung von Blokkierungen in der Behälteröffnung trägt, dadurch gekennzeichnet, dass der Kolben (2) eine Röhrenleitung (13, 16, 11) zur Verbindung von Behälter (1) und Zylinder (3) aufweist und dadurch, dass das Flüssigkeitsdruckmessmittel (8) zur direkten Messung des Flüssigkeitsdruckes im Behälter mit dem Zylinder verbunden ist.

2. Testgerät nach Anspruch 1, dadurch gekennzeichnet, dass der Kolben (2) und der Zylinder (3) durch einen Blasebalg (6) abgedichtet werden, wodurch eine Kompression des Gerätes das Einleiten von unter Druck stehender Flüssigkeit durch die Röhrenleitung (13, 16, 11) in den Behälter (1) ermöglicht.

3. Testgerät nach Anspruch 1 oder 2, dadurch gekennzeichnet, dass der Fühler (12) vom besagten einen Ende (4) des Kolbens herunterhängt, innerhalb der im Kolben vorgesehenen Röhrenleitung (13) axial beweglich und gegenüber der Röhrenleitung abgedichtet ist, wodurch eine Verstopfung in der Behälteröffnung den Fühler zu einer Bewegung gegenüber dem Kolben veranlasst und eine Oeffnung (19) im Kolben freilegt, so dass der Flüssigkeitsdruck im Behälter nach aussen entweicht.

4. Testgerät nach irgendeinem der Ansprüche 1 bis 3, dadurch gekennzeichnet, dass ein nach aussen entlüftendes Ventil (21) zur Begrenzung des Druckes im Behälter mit dem Zylinder (3) verbunden ist.

5. Testgerät nach irgendeinem der Ansprüche 1 bis 4, dadurch gekennzeichnet, dass das Druckmessmittel (8) ein Druckmanometer ist.

6. Testgerät nach irgendeinem der Ansprüche 1 bis 4, dadurch gekennzeichnet, dass das Druckmessmittel (8) ein druckfederplatengetriebener elektrischer Stromkreis ist, zur Kontrolle einer Warnlampe, eines Mechanismus zum Ausstoss der mangelhaften Behälter oder zur Verschaffung eines für andere Geräte bestimmten Störsignals.

## Revendications

1. Appareil de détection des fuites et des défauts de récipients, comprenant un piston (2) dont l'une des extrémités (4) est conformée de manière à s'adaptor, de façon étanche, dans une ouverture prévue dans le récipient (1), ce piston étant monté coulissant axialement dans un cylindre (3), des moyens pour introduire un fluide sous pression dans le récipient et des moyens (8) pour mesurer la pression du fluide dans le récipient; le piston (2) portant un palpeur (12) destiné à détecter le blocage dans l'ouverture du récipient, cet appareil étant caractérisé en ce que le piston (2) comporte une canalisation (13, 16, 11) établissant une communication entre le récipient (1) et le cylindre (3) et en ce que les moyens (8) de mesure de la pression du fluide sont connectés au cylindre de manière à permettre une mesure directe de la pression du fluide dans le récipient.

2. Appareil de détection suivant la revendication 1, caractérisé en ce que le piston (2) et le cylindre (3) sont rendus étanches au moyen d'un soufflet (6) de sorte qu'une compression de l'appareil permet d'introduire du fluide sous pression dans le récipient (1) à travers la canalisation (13, 16, 11).

3. Appareil de détection suivant la revendication 1 ou 2, caractérisé en ce que le palpeur (12) s'étend vers le bas à partir de ladite extrémité (4) du piston et est déplaçable axialement à l'intérieur de, et en étanchéité avec, la canalisation (13) dans le piston, de sorte qu'une obstruction dans l'ouverture du récipient provoque le mouvement du palpeur par rapport au piston et découvre une lumière (19) dans le piston afin de relâcher la pression du fluide se trouvant dans le récipient à l'atmosphère.

4. Appareil de détection suivant l'une quelconque des revendications 1 à 3, caractérisé en ce qu'une soupape (21) pour la mise à l'atmosphère est connectée au cylindre (3) afin de limiter la pression dans le récipient.

5. Appareil de détection suivant l'une quelconque des revendications 1 à 4, caractérisé en ce que les moyens (8) de mesure de la pression sont formés par un manomètre.

6. Appareil de détection suivant l'une quelconque des revendications 1 à 4, caractérisé en ce que les moyens (8) de mesure de la pression sont formés par un circuit électrique actionné par une membrane de pression, pour commander une lampe d'avertissement ou un mécanisme d'éjection des récipients défextueux, ou encore pour fournir un signal de défaut destiné à un autre équipement.

Fig.1.

1

## Fig.2.

2

## Fig.3.

3

# Fig.4.